# EUROPEAN PATENT SPECIFICATION

(11) **EP 2 170 042 B1**
(45) Date of publication and mention of the grant of the patent: **31.07.2019**
(21) Application number: 08771197.4
(22) Date of filing: 16.06.2008
(51) Int. Cl.: A01N 25/08, A01N 25/26, A01N 63/00, C09K 17/40, C05B 7/00, C05C 1/00, C05G 3/04

(54) **SUPERABSORBENT POLYMER SUSPENSION FOR USE IN AGRICULTURE**
SUPERABSORBER-POLYMERSUSPENSION FÜR DIE LANDWIRTSCHAFT
SUSPENSION DE POLYMÈRE SUPERABSORBANT DESTINÉE À ÊTRE UTILISÉE DANS L'AGRICULTURE

(30) Priority: 19.07.2007 US 780377
(43) Date of publication of application: 07.04.2010
(73) Proprietor: VJS Investments Limited, Dubai (AE)
(72) Inventor: SAVICH, Milan, H., Beaverton, OR 97008 (US); OLSON, Gary, S., Salem, OR 97302 (US); CLARK, Eddie, W., Salem, OR 97317 (US)
(74) Representative: Adam, Holger
(86) International application number: PCT/US2008/067127
(87) International publication number: WO 2009/014824

(56) References cited:
- WO-A1-2005/059023
- US-A- 4 893 390
- US-A- 4 985 251
- US-A1- 2002 095 965
- US-A1- 2005 159 315
- US-A1- 2007 015 878
- US-A1- 2007 044 528

## Description

### Technical Field

The present disclosure relates to soil amendments including superabsorbent polymer products and to novel compositions and methods for producing superabsorbent polymer products.

### Detailed Description

Superabsorbent polymers ("SAPs") are materials that imbibe or absorb at least 10 times their own weight in aqueous fluid and that retain the imbibed or absorbed aqueous fluid under moderate pressure. The imbibed or absorbed aqueous fluid is taken into the molecular structure of the SAP rather than being contained in pores from which the fluid could be eliminated by squeezing. Some SAPs can absorb up to, or more than, 1,000 times their weight in aqueous fluid. In one embodiment, SAPs can absorb between 200 to 600 times their weight in aqueous fluid.

SAPs may be used in agricultural or horticultural applications. The terms "agricultural" and "horticultural" are used synonymously and interchangeably throughout the present disclosure. Applying SAPs to soil in agricultural settings have resulted in earlier seed germination and/or blooming, decreased irrigation requirements, increased propagation, increased crop growth and production, increased crop quality, decreased soil crusting, increased yield and decreased time of emergence.

Synthetic SAPs are commercially available and are conventionally used in conjunction with baby or adult diapers, catamenials, hospital bed pads, cable coating and the like. However synthetic SAPs may also be used in agricultural applications. Another type of SAP product used more widely in agricultural applications includes starch graft copolymers. Starch graft copolymers comprise a monomer graft polymerized onto a polysaccharide, such as a starch or cellulose. Starch graft copolymers are typically used to absorb aqueous fluids for use in absorbent softgoods, in increasing the water holding capacity of soils, and as coatings onto seeds, fibers, clays, and the like.

Among the prior art, WO 2005/059023 A1 discloses a method of and a product formed by entrapping a bioactive, growth-promoting additive in a starch matrix to form a starch-based, superabsorbent polymer product for use in agricultural applications which involves (1) graft polymerizing a monomer and a starch to form a starch graft copolymer including a starch matrix; (2) isolating the starch graft copolymer; (3) forming particles of starch graft copolymer; and (4) adding a bioactive, growth-promoting additive such that at least some of the bioactive, growth-promoting additive is entrapped by the starch matrix. Furthermore, US 2007/044528 A1 discloses a pumpable, liquid soil amendment derived from pre-hydrating large-grained hydrogels with liquid fertilizer. Furthermore, US 2002/095965 A1 discloses a stable aqueous suspension of water-soluble polyacrylamide particles in a saturated solution of an ammonium salt, wherein the particles are characterized by a particle size of about 150 mesh, preferably 270 mesh, with 400 mesh most preferred.

The present invention provides a soil amendment according to claim 1, the use of said soil amendment according to claim 11, as well as a method of manufacturing said soil amendment according to claim 14.

One exemplary embodiment for producing a starch graft copolymer SAP for use in agricultural applications involves graft polymerizing a monomer, such as acrylonitrile, onto a polysaccharide, such as starch, in the presence of an initiator, such as a ceric (+4) salt, to form the starch graft copolymer. Polymerization may be accomplished over several minutes producing long grafted chains of polyacrylonitrile, or polyacrylonitrile combined with other monomers.

Exemplary polysaccharides include cellulose, starches, flours, and meals. Exemplary starches include native starches (e.g., corn starch (Pure Food Powder, manufactured by A.E. Staley), waxy maize starch (Waxy 7350, manufactured by A.E. Staley), wheat starch (Midsol 50, manufactured by Midwest Grain Products), potato starch (Avebe, manufactured by A.E. Staley)), dextrin starches (e.g., Stadex 9, manufactured by A.E. Staley), dextran starches (e.g., Grade 2P, manufactured by Pharmachem Corp.), corn meal, peeled yucca root, unpeeled yucca root, oat flour, banana flour, and tapioca flour. The starch may be gelatinized to provide optimal absorbency. An exemplary starch is gelatinized cornstarch. Furthermore, according to one embodiment, the weight ratio of the starch to the monomer is in the range of between 1:1 and 1:6.

Exemplary initiators for graft polymerizing a monomer onto a starch include cerium (+4) salts, such as ceric ammonium nitrate; ammonium persulfate; sodium persulfate; potassium persulfate; ferrous peroxide; ferrous ammonium sulfate-hydrogen peroxide; L-ascorbic acid; and potassium permanganate-ascorbic acid. Other suitable initiators known to those skilled in the art may be used, such as alternative persulfates and peroxides, as well as vanadium, manganese, etc. The amount of initiator used may vary based on the chosen initiator, the selected monomer, and the chosen starch. Some initiators, e.g., persulfates, may require the presence of heat. The initiator may be added in a single or multiple steps, and multiple initiators may be used.

The resulting starch graft copolymer may be saponified with an alkali metal, such as potassium hydroxide or sodium hydroxide, to convert the nitrile groups into a mixture of carboxamides and alkali carboxylates. The saponification step may provide a viscous mass or dough.

In alternative embodiments, a monomer, other than acrylonitrile, may be graft polymerized onto a starch in the presence of an initiator to form a starch graft copolymer. Exemplary alternative monomers include acrylic acid or methacrylic acid. Exemplary monomers may also include acrylamide or methacrylamide. Sulfonic acids, such as 2-acrylamido-2-methyl-propanesulfonic acid (AMPS) and vinyl sulfonic acid may also be used. Moreover, acrylates, such as ethyl acrylate and potassium acrylate may also be used. Derivatives and mixtures of the above-listed monomers may also be desirable.

In applications using acrylic acid, the addition of acrylamide thereto helps induce graft polymerization and adds to the absorbency of the SAP. By way of example, the ratio by weight of acrylic acid to acrylamide may be 2:1. Alternatively, the ratio of acrylic acid to acrylamide may also range up to a ratio of 9:1 and beyond. Because acrylamide is considered a neurotoxin, it may be desirable to reduce the relative amount of acrylamide to acrylic acid, while using enough to help induce graft polymerization of acrylic acid.

In alternative applications, acrylic acid may graft polymerize onto a starch or other polysaccharide without the assistance of acrylamide. For example, acrylic acid may polymerize when placed under heat and/or pressure. Polymerization without the addition of acrylamide may be accomplished, for example, in a heated screw extruder.

In this alternative embodiment, the monomer may be graft polymerized onto a polysaccharide in the presence of an initiator to form a starch graft copolymer. Exemplary starches and initiators have been described above. The starch graft copolymer may then be cross-linked, for example, by adding a chemical cross-linking agent to form a cross-linked starch graft copolymer. It may be desirable for the starch graft copolymer to be cross-linked if it dissolves in aqueous fluids previous to being cross-linked. Cross-linking is one method to permit the starch graft copolymer to absorb aqueous fluids without dissolving. However, the amount of cross-linking agent added is typically indirectly proportional to the absorbency of the resulting SAP product.

Exemplary cross-linking agents include: glycerides; diepoxides; diglycidyls; cyclohexadiamide; methylene bis-acrylamide; bis-hydroxyalkylamides, such as bis-hydroxypropyl adipamide; formaldehydes, such as urea-formaldehyde and melamine-formaldehyde resins; isocyanates including di- or tri-isocyanates; epoxy resins, typically in the presence of a base catalyst; and derivatives and mixtures thereof.

Alternative methods of cross-linking may also be employed. For example, a solid SAP product may be cross-linked through irradiation, such as through exposure to gamma or x-ray electromagnetic radiation, or to an electron beam and the like. Irradiation facilitates cross-linking of the starch graft copolymer by creating free radicals in the copolymer chain. In some applications, after irradiation an annealing or melting process may be used to re-form the cross-linked copolymer chains. Furthermore, it may be desirable to perform the irradiation process in an atmosphere relatively free of oxygen.

Although the addition of cross-linking agents may be desirable in the production of SAPs, self-cross-linking copolymers may also be used. In a self-cross-linking copolymer, either a single self-reactive functional group or multiple self-reactive functional groups or multiple co-reactive functional groups are incorporated into the mixture. One exemplary co-reactive functional group is a copolymer of acrylic acid and glycidyl methacrylate.

According to one embodiment, the pH of the starch graft copolymer may be adjusted to a desired value for the particular agricultural application. For example, the starch graft copolymer may be neutralized. Alternative pH values may be desirable depending upon the type of soil and the type of crop the resulting SAPs will be applied to. The resulting pH for most agricultural applications typically will range from about 6.0 to about 8.0. The desired pH may be greater or less than this range depending on the requirements for the particular agricultural application.

Alternatively, in some embodiments, pH adjustment of the starch graft copolymer may occur earlier, such as prior to the cross-linking step summarized in the alternative method described above. In alternative embodiments, pH adjustment may not be necessary. For instance, if potassium acrylate were used as the monomer, the resulting product may already be within an acceptable pH range.

In one embodiment, after the starch graft copolymer is saponified, the isolated product is recovered from the viscous polymerization dough with the use of water miscible solvents such as alcohols. Exemplary alcohols for use with this method include methanol, ethanol, propanol and isopropanol. Methanol is typically used to remove water content and the product is subsequently dried. Alternatively, the polymerization dough may be dried and isolated through use of an extruder, such as a heated extruder, with or without the assistance of methanol.

According to one embodiment, the resulting viscous saponificate may be forced through a die plate. Pre-forming the particle size through a die plate may be accomplished previous to the methanol precipitation step. The use of dies to form strands or rods having different shapes and diameters can improve the particle size formation process. This particular implementation offers enhanced control of the final particle size. The cross-linked starch graft copolymer (neutralized or unneutralized) may be forced through a die plate having holes of varying diameter (e.g., 0.16 cm (1/16 inch) to more than 0.64 cm (1/4 inch)) and varying shapes (e.g., round, star, ribbon, etc.).

Upon passing through a die plate, e.g., via an extruder, the moisture-reduced SAP product may be wetted with methanol, or another water-miscible solvent discussed above, to prevent the SAP granules from sticking together. A small amount of methanol may be lightly sprayed on the SAP granules to prevent re-agglomeration of the particles. Alternatively, a dusting agent may be applied to the SAP product to minimize re-agglomeration of the granules. Coating the SAP product with a dusting agent decreases their propensity to stick together. Exemplary dusting agents include cellulose, clay, starch, flour, and other natural or synthetic polymers that prevent the granules from sticking together.

The size of the SAP product exiting the extruder may be affected by several variables, such as the size of the holes in the die plate, the speed of the extrusion screw, the moisture content of the polymerization dough introduced to the extruder, etc. After passing through the extruder, the SAP product may be introduced to a grinder, chopper or granulator and subsequently granulized or pelletized.

In one embodiment, an in-line granulator may receive the polymerization dough to granulate the SAP product. The granulated SAP particles may subsequently be centrifuged. Alternatively, the SAP particles may be decanted through decanting technology and methods known to those having skill in the art.

The SAP particles may then be dried. A dryer may be employed to remove moisture as desired. In one embodiment, a final moisture content of approximately 12% by weight or less is desirable. The dried SAP particles may also be screened based on size through a particle separation or screening system to separate out SAP particles having common mesh sizes. Various particle separation systems may be used as would be apparent to those having skill in the art with the aid of the present disclosure. In one embodiment, the dried SAP particles may be passed through a particle separation system such as a screening system comprising an 2380 µm (8 mesh) screen, followed by a 710 µm (25 mesh) screen, followed by a 250 µm (60 mesh) screen, followed by a 149 µm (100 mesh) screen and a fines collection pan. Alternatively and by way of example, particle separation systems sold under the brand ROTEX® may be used.

Depending on the agricultural application, the final SAP product may have a particle size that is finer than 193 µm (75 mesh). In alternative applications, a courser mesh size may be used. Since the starch graft copolymer is incorporated into a liquid fertilizer suspension the particle size ranges from 250 µm (60 mesh) to 125 µm (120 mesh). In other embodiments, the mesh size may range from between 840 µm (20 mesh) to 31 µm (500 mesh). Alternatively, the mesh size may range from between 177 µm (80 mesh) to 106 µm (150 mesh). Finer particle sizes may be used to prevent the agglomeration of hydrogel in the orifices of spray nozzles and applicators.

During the process of producing the starch graft copolymer dough, various additives may optionally be included at different stages during production of the SAP product. For example, additives to promote plant growth may be included at some stage of the SAP production process, such as previous to drying, as would be apparent to those having skill in the art with the aid of the present disclosure. One exemplary additive includes fertilizer. In some embodiments, controlled-release fertilizers may be used. Alternative or additional additives that may also be included are, without limitation, pesticides, herbicides, fungicides, growth hormones and regulators, mycorrhizal fungi, kelp products, soil-based nutrients and the like, such as those disclosed in U.S. Patent Publication No. 2007/0015878, titled "Superabsorbent Polymer Products Including a Beneficial Additive and Methods of Making and Application".

There are various known methods for applying SAPs in agricultural applications. Conventionally, SAPs are applied to soil in granular form, typically before or while planting crops, turf seed, or previous to applying sod. Applying granular SAPs to existing vegetation has proven difficult since the SAPs are often most effective adjacent the root zone. Known methods for applying granular SAPs to existing vegetation include: (1) creating a hole in the soil with pressurized water, and blowing the SAP into the hole with pressurized air; (2) removing small plugs from the soil (i.e., sod), similar to aeration and depositing the SAP into the hole; and (3) cutting and temporarily uprooting sections of vegetation, such as sod, wherein the SAP granules are subsequently blown or otherwise applied to the soil underneath the sod. These exemplary conventional methods have proven to be inefficient, expensive and disruptive to the root system of existing vegetation.

Conventionally, it has also proven difficult to apply SAPs in a flowable state since introducing SAPs to water will cause the water to be entrapped in the SAP matrix, swell in size, and form a hydrogel that is too gelatinous and difficult to be absorbed through sod or soil. Furthermore, for a water-diluted SAP product to be flowable enough to be used in spray applications it must be diluted with a significant amount of water, such that there is not enough SAP per unit volume to have a significant enough water-absorbing effect upon application, or alternatively it would require the application of a large volume of water in order to deliver an effective amount of SAP product. For purposes of this application, the term "flowable" constitutes a liquid or gel having a viscosity ranging from between 1 and 150,000 centipoise. A product may be considered flowable if it will spread under pressure as well as if it flows easily and drips.

In other conventional methods, synthetic polymers, such as polyacrylamides and polyacrylates, have been suspended in a liquid fertilizer and delivered to existing turf through injection technology that injects a liquid fertilizer polymer suspension into the sod root zone. However, in some applications synthetic polymers have performed poorly and have been found to be too absorbent and less likely to release entrapped water into the surrounding environment.

In accordance with the present disclosure, a starch graft copolymer superabsorbent product is mixed with a liquid fertilizer to form a flowable and pumpable suspension. In one embodiment the flowable suspension has a viscosity ranging from between 1 centipoise to 500 centipoise. In another embodiment the flowable suspension has a viscosity ranging from between 1 centipoise to 1500 centipoise. In yet another alternative embodiment, the flowable and pumpable suspension has a viscosity ranging from between 1 centipoise to 10,000 centipoise. Furthermore, in another additional embodiment, the flowable and pumpable suspension has a viscosity ranging from between 1 centipoise and 55,000 centipoise.

Exemplary starch graft copolymers for use in the embodiments disclosed herein have been described above. As discussed, various sizes may be used as desirable for the particular application. For example, the starch-based SAP product may have a particle size that is finer than 193 µm (75 mesh), such as between 177 µm (80 mesh) to 106 µm (150 mesh). These finer particles may be desirable in spray applications using nozzles that have smaller orifice sizes. The finer particles are typically less likely to agglomerate and plug or obstruct the nozzle orifice. However, in alternative applications, a courser mesh size may be used. For example, larger particle sizes are often easier to handle than smaller grain particles. This is because the finer particle sizes tend to blow around easily when exposed to wind. Consequently, in some applications the mesh size may range from as large as 840 µm (20 mesh) to 31 µm (500 mesh). In yet other applications, the SAP product mesh size may range from 250 µm (60 mesh) to 125 µm (120 mesh).

Without being bound by theory, it is believed that one possible reason the SAP product is able to be suspended in liquid fertilizer without forming a thick, viscous hydrogel because of the various charged species present in the liquid fertilizer solution, such as salts or other anions and cations. Superabsorbent polymers may contain ions within their structure that have a capacity for either anionic exchange, cationic exchange or both. For example, the starch-based SAP product may include carboxyamide and/or alkali carboxylate functional groups, which are anionic. The electrolytes present in the liquid fertilizers may undergo cationic exchange with the salts present in the superabsorbent polymer complex.

As would be appreciated by those having skill in the art with the aid of the present disclosure, various liquid fertilizers may be used. Commercially available fertilizers are often identified through an N-P-K or N-P-K-S number. N-P-K-S fertilizer identifiers are labeled according to the content of four macronutrient elements, namely nitrogen (N), phosphorus (P), potassium (K) and sulfur (S). The mass fraction (percent) of nitrogen and sulfur is reported directly. However, potassium is reported as potash (potassium oxide - K₂O) and phosphorus is reported as phosphorus pentoxide (P₂O₅), the anhydride of phosphoric acid.

N-P-K-S macronutrient fertilizers used according to the invention include 10-34-0-0 (ammonium phosphate solution), 32-0-0-0 (urea ammonium nitrate solution), 28-0-0-0 (urea ammonium nitrate solution), 12-0-0-26 (ammonium thiosulfate liquid), 20-0-0-0 (urea ammonium nitrate solution), 3-18-18-0 (urea, ammonia, ammonium hydroxide, phosphoric acid, potash solution), 20-0-0-5 (urea ammonium sulfate solution), 0-0-15-0 (potash fertilizer solution), 7-21-7-0 (urea, ammonium sulfate, ammonium polyphosphate, ammonium nitrate, potassium chloride solution) and 0-0-13-0 (potash fertilizer solution). According to one embodiment, the liquid fertilizer is chosen from 32-0-0-0, 28-0-0-0, 10-34-0-0, 12-0-0-26, 3-18-18-0 and mixtures thereof. According to yet another embodiment, the liquid fertilizer is 10-34-0-0. The use of 10-34-0-0 can be advantageous because it may be easier to mix smaller SAP mesh sizes into a suspension compared to other liquid fertilizers.

Additionally, slow-release nitrogen fertilizers may be included in the liquid fertilizer SAP suspension. Exemplary slow-release nitrogen fertilizers include those sold under the brands Nitamin™ and Nsure™. In one embodiment, a soil amendment may include a starch-based SAP product with 10-34-0-0 liquid fertilizer and a slow-release nitrogen fertilizer.

It is believed that the ability of SAP products to swell and expand is affected by the charged species (i.e., cations and/or anions) present in the liquid fertilizer solution. Therefore, when SAP products are placed in a concentrated cationic/anionic solution, their absorbent capacity is temporarily diminished compared to a solute-free environment. Once the SAP product is placed in a liquid fertilizer suspension, it may be possible to add some water to the suspension without creating a highly viscous hydrogel, thus making the soil amendment suspension more flowable. According to one embodiment, granular starch graft copolymer particles are applied directly to the liquid fertilizer instead of pre-hydrating the SAP product into a gel before mixing with the fertilizer.

In one embodiment, between 0.23 kg (0.5 lbs.) and 6.80 kg (15 lbs.) of starch graft copolymer product, in granular form, is mixed with between 1.89 L (0.5 gallons) to 113.56 L (30 gallons) of liquid fertilizer for every acre of application. In a first exemplary embodiment, for every 3.78 L (1 gallon) of liquid fertilizer, such as 10-34-0-0, 0.15 kg (0.33 lbs.) of starch-based SAP product is added to provide a non-viscous flowable soil amendment suspension. In a second exemplary embodiment, for every 3.78 L (1 gallon) of liquid fertilizer, such as 10-34-0-0, 0.23 kg (0.5 lbs.) of starch-based SAP product is added to provide a flowable soil amendment suspension that is slightly more viscous than the first exemplary embodiment. Moreover, in a third exemplary embodiment, for every 3.78 L (1 gallon) of liquid fertilizer, such as 10-34-0-0, 0.45 kg (1.0 lbs.) of starch-based SAP product is added to provide a flowable soil amendment suspension that is even more viscous than the first and second exemplary embodiments. Additionally, in a fourth exemplary embodiment, for every 3.78 L (1 gallon) of liquid fertilizer, such as 10-34-0-0, 0.90 kg (2.0 lbs.) of starch-based SAP product is added to provide a flowable soil amendment suspension that is even more viscous than the first, second and third exemplary embodiments. While the viscosities of the
above-identified exemplary embodiments vary, all are considered flowable and can be sprayed or pumped to deliver in a particular agricultural application.

A flowable SAP/fertilizer suspension is beneficial because it provides greater flexibility in delivering SAP products in agricultural settings. The suspension may be applied to soil or growing medium pre-planting or pre-transplanting. For instance, the suspension can be broadcast previous to applying seed, laying sod or transplanting. Pre-plant application may be accomplished by through a shank application into the soil, spraying the soil and subsequent tilling, or incorporating into a bed.

Alternatively, the suspension may be applied during planting of a seed or during transplanting of a plant. For example, the suspension can be metered out through an orifice of a spray nozzle in a band with the seed at planting. Additionally, the suspension can applied post planting or post-transplanting. For instance, the suspension may be injected into the root zone of existing vegetation, such as turf, through non-invasive liquid injection technology, such as machines sold under the brand Liquiject™, which utilize spikes protruding from a rotating hub that pass the SAP suspension through the spike and into the root zone of existing vegetation. Alternatively, with agricultural crops the suspension may be side dressed by shanking the suspension into the soil between 10.2 cm (4 inches) to 15.2 cm (6 inches) below the soil surface, or otherwise adjacent the root zone.

Once placed in the soil, the absorbent capacity of the SAP product is still temporarily diminished compared to a solute-free environment because the SAP product continues to interact with the electrolyte fertilizer solution and has entrapped the liquid fertilizer within the polymer matrix. The SAP product also functions as a controlled release mechanism for the fertilizer so that rainfall or irrigation does not wash the fertilizer away from the root zone, but maintains the fertilizer presence for an extended period of time. Without being bound by theory, it is believed that the imbibed fertilizer salts may be polarized around charged ionic groups of the polymer matrix, oriented around hydrogen bonding groups, or present in pores in the bulk water. The movement of the fertilizer salts from the polymer into the surrounding soil may be driven by mass transfer resulting from a concentration gradient and by Brownian molecular motion.

As the fertilizer salts begin to leave the polymer matrix, the absorbency of the SAP product begins to return to its normal potential and provides a water-retention function adjacent the root zone. As described above, the starch-based SAP product provides for earlier seed germination and/or blooming, decreased irrigation requirements, increased propagation, increased crop growth and production, increased crop quality, decreased soil crusting, increased yield and decreased time of emergence.

The liquid fertilizer/SAP suspension described above may also include various micronutrients depending on the type of application, such as agricultural, horticultural, turf, etc., soil conditions, climate conditions and various other factors that would be appreciated by those having skill in the art with the aid of the present disclosure. Exemplary micronutrients may be included in salt form, or otherwise, and may include an agriculturally useful multivalent cation solution having elemental components which include, but are not limited to, magnesium (Mg), iron (Fe), manganese (Mn), boron (B), calcium (Ca), copper (Cu), molybdenum (Mo), nickel (Ni), and zinc (Zn). The presence of a multivalent cation solution may be beneficial because it induces cation exchange within the fertilizer/SAP suspension, potentially increasing the ability of the SAP product to be included in suspension. Additionally, the multivalent cations, such as divalent and trivalent cations, may have beneficial time-release properties in the soil because they are more easily retained by the polymer matrix.

Because the type of liquid fertilizer, the amount of SAP product per unit volume of liquid fertilizer, and the optional presence of micronutrients in the suspension is selected to maximize SAP and fertilizer effectiveness in various environments, the parameters for manufacturing the fertilizer/SAP suspension may vary greatly. Therefore, the following examples are intended to further illustrate exemplary embodiments, and are not intended to limit the scope of the disclosure.

### EXAMPLE 1

57 milliliters of 10-34-0-0 (ammonium phosphate solution) liquid fertilizer were obtained. 13.6 grams of starch-based superabsorbent polymer particles, sold under the trademark Zeba®, were obtained having average mesh sizes ranging between 250 µm (60 mesh) and 125 µm (120 mesh). The starch-based superabsorbent polymer particles were added slowly to the 10-34-0-0 liquid fertilizer while thoroughly mixing. The mixture resulted in a flowable suspension which was sprayable under pressure through common screens and orifices. It is of note that 13.6 grams of SAP product for every 57 milliliters of 10-34-0-0 is the equivalent of 0.90 kg (2 pounds) of SAP product for every 3.78 L (1 gallon) of 10-34-0-0.

### EXAMPLE 2

57 milliliters of 10-34-0-0 (ammonium phosphate solution) liquid fertilizer were obtained. 13.6 grams of starch-based superabsorbent polymer particles, sold under the trademark Zeba®, were obtained having average mesh sizes ranging between 210 µm (70 mesh) and 125 µm (120 mesh). The starch-based superabsorbent polymer particles were added slowly to the 10-34-0-0 liquid fertilizer while thoroughly mixing. The mixture resulted in a flowable suspension which was sprayable under pressure through common screens and orifices.

### EXAMPLE 3

57 milliliters of 10-34-0-0 (ammonium phosphate solution) liquid fertilizer were obtained. 13.6 grams of starch-based superabsorbent polymer particles, sold under the trademark Zeba®, were obtained having average mesh sizes ranging between 1190 µm (16 mesh) and 590 µm (30 mesh). The starch-based superabsorbent polymer particles were added slowly to the 10-34-0-0 liquid fertilizer while thoroughly mixing. The mixture resulted in a flowable suspension which was sprayable under pressure through common screens and orifices.

### EXAMPLE 4

57 milliliters of 10-34-0-0 (ammonium phosphate solution) liquid fertilizer were obtained. 6.8 grams of starch-based superabsorbent polymer particles, sold under the trademark Zeba®, were obtained having average mesh sizes ranging between 250 µm (60 mesh) and 125 µm (120 mesh). The starch-based superabsorbent polymer particles were added slowly to the 10-34-0-0 liquid fertilizer while thoroughly mixing. The mixture resulted in a flowable suspension which was sprayable under pressure through common screens and orifices. It is of note that 6.8 grams of SAP product for every 57 milliliters of 10-34-0-0 is the equivalent of 0.45 kg (1 pound) of SAP product for every 3.78 L (1 gallon) of 10-34-0-0.

### EXAMPLE 5

114 milliliters of 10-34-0-0 (ammonium phosphate solution) liquid fertilizer were obtained. 6.8 grams of starch-based superabsorbent polymer particles, sold under the trademark Zeba®, were obtained having average mesh sizes ranging between 250 µm (60 mesh) and 125 µm (120 mesh). The starch-based superabsorbent polymer particles were added slowly to the 10-34-0-0 liquid fertilizer while thoroughly mixing. 114 milliliters of 32-0-0-0 (urea ammonium nitrate solution) liquid fertilizer was added while thoroughly mixing. 57 milliliters of 12-0-0-26 (ammonium thiosulfate liquid) was then added to the suspension. 57 milliliters of 3-18-18-0 (urea, ammonia, ammonium hydroxide, phosphoric acid, potash solution) was subsequently added to the suspension. It is of note that 6.8 grams of SAP product for every 114 milliliters of 10-34-0-0 and 32-0-0-0 and every 57 milliliters of 12-0-0-26 and 3-18-18-0 is the equivalent of 0.45 kg (1 pound) of SAP product for every 7.57 L (2 gallons) of 10-34-0-0 and 32-0-0-0 and every 3.78 L (1 gallon) of 12-0-0-26 and 3-18-18-0.

### EXAMPLE 6

114 milliliters of 10-34-0-0 (ammonium phosphate solution) liquid fertilizer were obtained. 6.8 grams of starch-based superabsorbent polymer particles, sold under the trademark Zeba®, were obtained having average mesh sizes ranging between 250 µm (60 mesh) and 125 µm (120 mesh). The starch-based superabsorbent polymer particles were added slowly to the 10-34-0-0 liquid fertilizer while thoroughly mixing. 114 milliliters of 32-0-0-0 (urea ammonium nitrate solution) liquid fertilizer was added while thoroughly mixing. 57 milliliters of 12-0-0-26 (ammonium thiosulfate liquid) was then added to the suspension. 57 milliliters of 3-18-18-0 (urea, ammonia, ammonium hydroxide, phosphoric acid, potash solution) was subsequently added to the suspension. 114 milliliters of water was added to the suspension to reduce its viscosity. It is of note that 6.8 grams of SAP product for every 114 milliliters of 10-34-0-0, 32-0-0-0 and water and every 57 milliliters of 12-0-0-26 and 3-18-18-0 is the equivalent of 0.45 kg (1 pound) of SAP product for every 7.57 L (2 gallons) of 10-34-0-0, 32-0-0-0 and water and every 3.78 L (1 gallon) of 12-0-0-26 and 3-18-18-0.

### EXAMPLE 7

114 milliliters of 10-34-0-0 (ammonium phosphate solution) liquid fertilizer were obtained. 6.8 grams of starch-based superabsorbent polymer particles, sold under the trademark Zeba®, were obtained having average mesh sizes ranging between 250 µm (60 mesh) and 125 µm (120 mesh). The starch-based superabsorbent polymer particles were added slowly to the 10-34-0-0 liquid fertilizer while thoroughly mixing. 114 milliliters of 32-0-0-0 (urea ammonium nitrate solution) liquid fertilizer was added while thoroughly mixing. 57 milliliters of 12-0-0-26 (ammonium thiosulfate liquid) was then added to the suspension. 57 milliliters of 3-18-18-0 (urea, ammonia, ammonium hydroxide, phosphoric acid, potash solution) was subsequently added to the suspension. 228 milliliters of water was added to the suspension to reduce viscosity of the suspension. It is of note that 6.8 grams of SAP product for every 114 milliliters of 10-34-0-0 and 32-0-0-0, every 57 milliliters of 12-0-0-26 and 3-18-18-0 and every 228 milliliters of water is the equivalent of 0.45 kg (1 pound) of SAP product for every 7.57 L (2 gallons) of 10-34-0-0 and 32-0-0-0, every 3.78 L (1 gallon) of 12-0-0-26 and 3-18-18-0 and every 15.14 L (4 gallons) for water.

### EXAMPLE 8

114 milliliters of 10-34-0-0 (ammonium phosphate solution) liquid fertilizer, 114 milliliters of 32-0-0-0 (urea ammonium nitrate solution) liquid fertilizer, 57 milliliters of 12-0-0-26 (ammonium thiosulfate liquid) liquid fertilizer and 57 milliliters of 3-18-18-0 (urea, ammonia, ammonium hydroxide, phosphoric acid, potash solution) were mixed together. 6.8 grams of starch-based superabsorbent polymer particles, sold under the trademark Zeba®, were obtained having average mesh sizes ranging between 250 µm (60 mesh) and 125 µm (120 mesh). The starch-based superabsorbent polymer particles were added slowly to the liquid fertilizer solution while thoroughly mixing. The mixture resulted in a flowable suspension which was sprayable under pressure through common screens and orifices.

All suspensions created in Examples 1-8 above constituted a sprayable solution and were capable of passing through a 736 µm (24 mesh) screen under pressure.

It will be obvious to those having skill in the art that many changes may be made to the details of the above-described embodiments. Furthermore, the methods disclosed herein comprise one or more steps or actions for performing the described method. The method steps and/or actions may be interchanged with one another. In other words, unless a specific order of steps or actions is required for proper operation of the embodiment, the order and/or use of specific steps and/or actions may be modified.

## Claims

1. A soil amendment comprising a flowable suspension comprising a superabsorbent polymer mixed in a liquid fertilizer suspension,
wherein:
the superabsorbent polymer comprises a starch graft copolymer;
the starch graft copolymer comprises a starch and a monomer;
the starch graft copolymer is formed by graft polymerizing the monomer onto the starch in the presence of an initiator;
the starch graft copolymer comprises particles having a mesh size between 250 µm (60 mesh) and 125 µm (120 mesh) and preferably finer than about 195 µm (75 mesh);
the liquid fertilizer comprises an N-P-K-S macronutrient fertilizer chosen from: 32-0-0-0, 28-0-0-0, 10-34-0-0, 12-0-0-26, 20-0-0-0, 3-18-18-0, 20-0-0-5, 0-0-15-0, 0-0-13-0, 7-21-7-0 and mixtures thereof; and
the flowable suspension contains between 0.23 kg (0.5 lbs) and 6.80 kg (15 lbs) of the starch graft copolymer and between 1.89 L (0.5 gallons) and 56.78 L (15 gallons) of the liquid fertilizer and a viscosity of less than 150,000 centipoise.

2. The soil amendment of claim 1, wherein the monomer comprises acrylonitrile.

3. The soil amendment of claim 1, wherein the monomer comprises at least one of the following: acrylic acid, acrylamide, methacrylamide, 2-acrylamido-2-methylpropanesulfonic acid, methacrylic acid, vinyl sulfonic acid, ethyl acrylate, potassium acrylate, and derivatives and mixtures thereof.

4. The soil amendment of claim 1, wherein the starch graft copolymer is made by the following steps:
graft polymerizing the monomer onto the starch to form the starch graft copolymer;
saponifying the starch graft copolymer to form a saponificate;
precipitating the saponified starch graft copolymer; and
forcing the saponificate through a plurality of apertures to form strands of starch graft copolymer saponificate.

5. The soil amendment of claim 1, wherein the liquid fertilizer comprises an agriculturally useful multivalent cation solution.

6. The soil amendment of claim 5, wherein the agriculturally useful multivalent cation solution comprises micronutrients chosen from: magnesium (Mg), iron (Fe), manganese (Mn), boron (B), calcium (Ca), copper (Cu), molybdenum (Mo), nickel (Ni), and zinc (Zn).

7. The soil amendment of claim 1, further comprising a slow-release nitrogen fertilizer.

8. The soil amendment of claim 1, wherein the flowable suspension has a viscosity of less than 55,000 centipoise, or less than 10,000 centipoise, or less than 1500 centipoise, or less than 500 centipoise.

9. The soil amendment of any of claims 1-8, wherein the starch graft copolymer comprises particles having a mesh size between 250 µm (60 mesh) and 125 µm (120 mesh), and said flowable suspension comprises
a mixture of starch-based SAP and 10-34-0-0 liquid fertilizer wherein the mixture includes 0.15 kg (0.33 lbs) of starch-based SAP for every 3.79 L (1 gallon) of 10-34-0-0 liquid fertilizer; or
a mixture of starch-based SAP and 10-34-0-0 liquid fertilizer wherein the mixture includes 0.23 kg (0.5 lbs) of starch-based SAP for every 3.79 L (1 gallon) of 10-34-0-0 liquid fertilizer; or
a mixture of starch-based SAP and 10-34-0-0 liquid fertilizer wherein the mixture includes 0.45 kg (1 lb) of starch-based SAP for every 3.79 L (1 gallon) of 10-34-0-0 liquid fertilizer; or
a mixture of starch-based SAP and 10-34-0-0 liquid fertilizer wherein the mixture includes 0.91 kg (2 lbs) of starch-based SAP for every 3.79 L (1 gallon) of 10-34-0-0 liquid fertilizer.

10. The soil amendment of any of claims 1-8, wherein the starch graft copolymer comprises particles having a mesh size between 250 µm (60 mesh) and 125 µm (120 mesh), and said flowable suspension comprises
a mixture of starch-based SAP and 10-34-0-0, 32-0-0-0, 12-0-0-26 and 3-18-18-0 liquid fertilizers wherein the mixture includes 6.8 g of starch-based SAP for every 114 mL of 10-34-0-0 and 32-0-0-0 and 57 mL 12-0-0-26 and 3-18-18-0 liquid fertilizer; or
a mixture of starch-based SAP, water and 10-34-0-0, 32-0-0-0, 12-0-0-26 and 3-18-18-0 liquid fertilizers wherein the mixture includes 6.8 g of starch-based SAP for every 114 mL of water, 10-34-0-0 and 32-0-0-0 and 57 mL 12-0-0-26 and 3-18-18-0 liquid fertilizer; or
a mixture of starch-based SAP, water and 10-34-0-0, 32-0-0-0, 12-0-0-26 and 3-18-18-0 liquid fertilizers wherein the mixture includes 6.8 g of starch-based SAP for every 114 mL of 10-34-0-0 and 32-0-0-0 and 57 mL 12-0-0-26 and 3-18-18-0 liquid fertilizer and 228 mL of water.

11. Use of the soil amendment of any of claims 1-10 wherein said flowable suspension is sprayed or pumped for delivering and applying to soil or growing medium, wherein said flowable suspension may be metered out.

12. Use of the soil amendment of claim 11 wherein said flowable suspension is broadcast onto soil through a spray nozzle.

13. Use of the soil amendment of claim 11 wherein said flowable suspension is sprayed or injected into soil.

14. A method of manufacturing a soil amendment, comprising:
mixing a starch graft copolymer superabsorbent product according to claim 1 with a liquid fertilizer that comprises an N-P-K-S macronutrient fertilizer chosen from: 32-0-0-0, 28-0-0-0, 10-34-0-0, 12-0-0-26, 20-0-0-0, 3-18-18-0, 20-0-0-5, 0-0-15-0, 0-0-13-0, 7-21-7-0 and mixtures thereof to form a flowable suspension contains 0.15 kg (0.33 lbs), 0.23 kg (0.5 lbs), 0.45 kg (1.0 lbs) or 0.91 kg (2.0 lbs) of the starch graft copolymer for each 3.79 L (1.0 gallons) of the liquid fertilizer.

15. The method of manufacturing the soil amendment of claim 14, wherein the starch graft copolymer superabsorbent product is produced by a method which comprises:
graft polymerizing a monomer onto a starch to form the starch graft copolymer;
saponifying the starch graft copolymer to form a saponificate;
precipitating the saponified starch graft copolymer;
forcing the saponificate through a plurality of apertures to form strands of starch graft copolymer saponificate; and
granularizing the strands of starch graft copolymer saponificate.

## Patentansprüche

1. Bodenverbesserungsmittel, umfassend eine fließfähige Suspension, umfassend ein superabsorbierendes Polymer (Superabsorber-Polymer), eingemischt in eine Flüssigdüngersuspension,
wobei:
das superabsorbierende Polymer ein Stärkepfropfcopolymer umfasst;
das Stärkepfropfcopolymer eine Stärke und ein Monomer umfasst;
das Stärkepfropfcopolymer durch Pfropfpolymerisieren des Monomers auf die Stärke in der Gegenwart eines Initiators gebildet wurde;
das Stärkepfropfcopolymer Partikel mit einer Siebweite (Meshgröße) zwischen 250 µm (60 Mesh) und 125 µm (120 Mesh) und vorzugsweise feiner als etwa 195 µm (75 Mesh) umfasst;
der Flüssigdünger einen N-P-K-S-Makronährstoffdünger, ausgewählt aus: 32-0-0-0, 28-0-0-0, 10-34-0-0, 12-0-0-26, 20-0-0-0, 3-18-18-0, 20-0-0-5, 0-0-15-0, 0-0-13-0, 7-21-7-0 und Mischungen davon, umfasst; und
die fließfähige Suspension zwischen 0,23 kg (0,5 lbs) und 6,80 kg (15 lbs) des Stärkepfropfcopolymers und zwischen 1,89 L (0,5 Gallonen) und 56,78 L (15 Gallonen) des Flüssigdüngers enthält und eine Viskosität von weniger als 150.000 Centipoise hat.

2. Bodenverbesserungsmittel nach Anspruch 1, wobei das Monomer Acrylnitril umfasst.

3. Bodenverbesserungsmittel nach Anspruch 1, wobei das Monomer wenigstens eines der folgenden umfasst: Acrylsäure, Acrylamid, Methacrylamid, 2-Acrylamido, 2-Methylpropansulfonsäure, Methacrylsäure, Vinylsulfonsäure, Ethylacrylat, Kaliumacrylat und Derivate und Mischungen davon.

4. Bodenverbesserungsmittel nach Anspruch 1, wobei das Stärkepfropfcopolymer durch die folgenden Schritte hergestellt wird:
Pfropfpolymerisieren des Monomers auf die Stärke, um das Stärkepfropfcopolymer zu bilden;
Verseifen des Stärkepfropfcopolymers, um ein verseiftes Produkt zu bilden;
Ausfällen des verseiften Stärkepfropfcopolymers und
Zwingen des verseiften Produkts durch eine Vielzahl an Öffnungen, um Stränge des verseiften Produkts des Stärkepfropfcopolymers zu bilden.

5. Bodenverbesserungsmittel nach Anspruch 1, wobei der Flüssigdünger eine landwirtschaftlich nützliche Lösung eines mehrwertigen Kations umfasst.

6. Bodenverbesserungsmittel nach Anspruch 5, wobei die landwirtschaftlich nützliche Lösung eines mehrwertigen Kations Mikronährstoffe, ausgewählt aus: Magnesium (Mg), Eisen (Fe), Mangan (Mn), Bor (B), Calcium (Ca), Kupfer (Cu), Molybdän (Mo), Nickel (Ni) und Zink (Zn), umfasst.

7. Bodenverbesserungsmittel nach Anspruch 1, das weiterhin einen Stickstoffdünger mit langsamer Freisetzung umfasst.

8. Bodenverbesserungsmittel nach Anspruch 1, wobei die fließfähige Suspension eine Viskosität von weniger als 55.000 Centipoise oder weniger als 10.000 Centipoise oder weniger als 1.500 Centipoise oder weniger als 500 Centipoise hat.

9. Bodenverbesserungsmittel nach einem der Ansprüche 1 bis 8, wobei das Stärkepfropfcopolymer Partikel mit einer Siebweite (Meshgröße) zwischen 250 µm (60 Mesh) und 125 µm (120 Mesh) umfasst und die fließfähige Suspension umfasst:
eine Mischung aus stärkebasiertem SAP und 10-34-0-0-Flüssigdünger, wobei die Mischung 0,15 kg (0,33 lbs) an stärkebasiertem SAP pro 3,79 L (1 Gallone) von 10-34-0-0-Flüssigdünger umfasst; oder
eine Mischung aus stärkebasiertem SAP und 10-34-0-0-Flüssigdünger, wobei die Mischung 0,23 kg (0,5 lbs) an stärkebasiertem SAP pro 3,79 L (1 Gallone) von 10-34-0-0-Flüssigdünger umfasst; oder
eine Mischung aus stärkebasiertem SAP und 10-34-0-0-Flüssigdünger, wobei die Mischung 0,45 kg (1 lbs) an stärkebasiertem SAP pro 3,79 L (1 Gallone) von 10-34-0-0-Flüssigdünger umfasst; oder
eine Mischung aus stärkebasiertem SAP und 10-34-0-0-Flüssigdünger, wobei die Mischung 0,91 kg (2 lbs) an stärkebasiertem SAP pro 3,79 L (1 Gallone) von 10-34-0-0-Flüssigdünger umfasst.

10. Bodenverbesserungsmittel nach einem der Ansprüche 1 bis 8, wobei das Stärkepfropfcopolymer Partikel mit einer Siebweite (Meshgröße) zwischen 250 µm (60 Mesh) und 125 µm (120 Mesh) umfasst und die fließfähige Suspension umfasst:
eine Mischung aus stärkebasiertem SAP und 10-34-0-0-, 32-0-0-0-, 12-0-0-26- und 3-18-18-0-Flüssigdüngern, wobei die Mischung 6,8 g an stärkebasiertem SAP pro 114 mL 10-34-0-0- und 32-0-0-0- und pro 57 mL 12-0-0-26- und 3-18-18-0-Flüssigdünger umfasst; oder
eine Mischung aus stärkebasiertem SAP, Wasser und 10-34-0-0-, 32-0-0-0-, 12-0-0-26- und 3-18-18-0-Flüssigdüngern, wobei die Mischung 6,8 g an stärkebasiertem SAP pro 114 mL Wasser, 10-34-0-0- und 32-0-0-0- und pro 57 mL 12-0-0-26- und 3-18-18-0-Flüssigdünger umfasst; oder
eine Mischung aus stärkebasiertem SAP, Wasser und 10-34-0-0-, 32-0-0-0-, 12-0-0-26- und 3-18-18-0-Flüssigdüngern, wobei die Mischung 6,8 g an stärkebasiertem SAP pro 114 mL, 10-34-0-0- und 32-0-0-0- und pro 57 mL 12-0-0-26- und 3-18-18-0-Flüssigdünger und pro 228 mL Wasser umfasst.

11. Verwendung des Bodenverbesserungsmittels nach einem der Ansprüche 1 bis 10, wobei die fließfähige Suspension für die Abgabe und das Anwenden an Boden oder Wachstumsmedium gesprüht oder gepumpt wird, wobei die fließfähige Suspension dosiert werden kann.

12. Verwendung des Bodenverbesserungsmittels nach Anspruch 11, wobei die fließfähige Suspension durch eine Sprühdüse auf den Boden übertragen wird.

13. Verwendung des Bodenverbesserungsmittels nach Anspruch 11, wobei die fließfähige Suspension in den Boden gesprüht oder eingespritzt wird.

14. Verfahren zur Herstellung eines Bodenverbesserungsmittels, umfassend:
Mischen eines superabsorbierenden Produkts eines Stärkepfropfcopolymers gemäß Anspruch 1 mit einem Flüssigdünger, der einen N-P-K-S-Makronährstoffdünger, ausgewählt aus: 32-0-0-0, 28-0-0-0, 10-34-0-0, 12-0-0-26, 20-0-0-0, 3-18-18-0, 20-0-0-5, 0-0-15-0, 0-0-13-0, 7-21-7-0 und Mischungen davon, umfasst, um eine fließfähige Suspension zu bilden, die 0,15 kg (0,33 lbs), 0,23 kg (0,5 lbs), 0,45 kg (1,0 lbs) oder 0,91 kg (2,0 lbs) des Stärkepfropfcopolymers pro 3,79 L (1,0 Gallone) des Flüssigdüngers enthält.

15. Verfahren zur Herstellung des Bodenverbesserungsmittels nach Anspruch 14, wobei das superabsorbierende Produkt des Stärkepfropfcopolymers hergestellt wird durch ein Verfahren, welches umfasst:
Pfropfpolymerisieren eines Monomers auf eine Stärke, um das Stärkepfropfcopolymer zu bilden;
Verseifen des Stärkepfropfcopolymers, um ein verseiftes Produkt zu bilden;
Ausfällen des verseiften Stärkepfropfcopolymers;
Zwingen des verseiften Produkts durch eine Vielzahl an Öffnungen, um Stränge des verseiften Produkts des Stärkepfropfcopolymers zu bilden; und
Granulieren der Stränge des verseiften Produkts des Stärkepfropfcopolymers.

## Revendications

1. Amendement de sol comprenant une suspension à écoulement libre comprenant un polymère superabsorbant mélangé dans une suspension d'engrais liquide,
dans lequel :
le polymère superabsorbant comprend un copolymère greffé d'amidon ;
le copolymère greffé d'amidon comprend un amidon et un monomère ;
le copolymère greffé d'amidon est formé en polymérisant par greffe le monomère sur l'amidon en présence d'un initiateur ;
le copolymère greffé d'amidon comprend des particules ayant un maillage entre 250 µm (60 mesh) et 125 µm (120 mesh) et de préférence plus fin qu'environ 195 µm (75 mesh) ;
l'engrais liquide comprend un engrais de macronutriments N-P-K-S choisi parmi : 32-0-0-0, 28-0-0-0, 10-34-0-0, 12-0-0-26, 20-0-0-0, 3-18-18-0, 20-0-0-5, 0-0-15-0, 0-0-13-0, 7-21-7-0 et des mélanges de ceux-ci ; et
la suspension à écoulement libre contient entre 0,23 kg (0,5 livres) et 6,80 kg (15 livres) du copolymère greffé d'amidon et entre 1,89 l (0,5 gallon) et 56,78 l (15 gallons) de l'engrais liquide et une viscosité inférieure à 150 000 centipoises.

2. Amendement de sol selon la revendication 1, dans lequel le monomère comprend de l'acrylonitrile.

3. Amendement de sol selon la revendication 1, dans lequel le monomère comprend au moins l'un des suivants : de l'acide acrylique, de l'acrylamide, du méthacrylamide, de l'acide 2-acrylamido-2-méthyl-propanesulfonique, de l'acide méthacrylique, de l'acide vinylsulfonique, de l'acrylate d'éthyle, de l'acrylate de potassium, et des dérivés et mélanges de ceux-ci.

4. Amendement de sol selon la revendication 1, dans lequel le copolymère greffé d'amidon est fait par les étapes suivantes :
polymériser par greffe le monomère sur l'amidon pour former le copolymère greffé d'amidon ;
saponifier le copolymère greffé d'amidon pour former un saponifié ;
précipiter le copolymère greffé d'amidon saponifié ; et
forcer le saponifié à travers une pluralité d'ouvertures pour former des rangées de saponifiés de copolymère greffé d'amidon.

5. Amendement de sol selon la revendication 1, dans lequel l'engrais liquide comprend une solution de cation multivalent utile dans le domaine agricole.

6. Amendement de sol selon la revendication 5, dans lequel la solution de cation multivalent utile dans le domaine agricole comprend des micronutriments choisis parmi : le magnésium (Mg), le fer (Fe), le manganèse (Mn), le bore (B), le calcium (Ca), le cuivre (Cu), le molybdène (Mo), le nickel (Ni), et le zinc (Zn).

7. Amendement de sol selon la revendication 1, comprenant en outre un engrais azoté à libération lente.

8. Amendement de sol selon la revendication 1, dans lequel la suspension à écoulement libre a une viscosité inférieure à 55 000 centipoises, ou inférieure à 10 000 centipoises, ou inférieure à 1 500 centipoises, ou inférieure à 500 centipoises.

9. Amendement de sol selon l'une quelconque des revendications 1 à 8, dans lequel le copolymère greffé d'amidon comprend des particules ayant un maillage entre 250 µm (60 mesh) et 125 µm (120 mesh), et ladite suspension à écoulement libre comprend
un mélange de SAP à base d'amidon et d'engrais liquide 10-34-0-0 dans lequel le mélange inclut 0,15 kg (0,33 livre) de SAP à base d'amidon pour chaque 3,79 l (1 gallon) d'engrais liquide 10-34-0-0 ; ou
un mélange de SAP à base d'amidon et d'engrais liquide 10-34-0-0 dans lequel le mélange inclut 0,23 kg (0,5 livre) de SAP à base d'amidon pour chaque 3,79 l (1 gallon) d'engrais liquide 10-34-0-0 ; ou
un mélange de SAP à base d'amidon et d'engrais liquide 10-34-0-0 dans lequel le mélange inclut 0,45 kg (1 livre) de SAP à base d'amidon pour chaque 3,79 l (1 gallon) d'engrais liquide 10-34-0-0 ; ou
un mélange de SAP à base d'amidon et d'engrais liquide 10-34-0-0 dans lequel le mélange inclut 0,91 kg (2 livres) de SAP à base d'amidon pour chaque 3,79 l (1 gallon) d'engrais liquide 10-34-0-0.

10. Amendement de sol selon l'une quelconque des revendications 1 à 8, dans lequel le copolymère greffé d'amidon comprend des particules ayant un maillage entre 250 µm (60 mesh) et 125 µm (120 mesh), et ladite suspension à écoulement libre comprend
un mélange de SAP à base d'amidon et d'engrais liquide 10-34-0-0, 32-0-0-0,12-0-0-26 et 3-18-18-0 dans lequel le mélange inclut 6,8 g de SAP à base d'amidon pour chaque 114 ml d'engrais liquide 10-34-0-0 et 32-0-0-0 et 57 ml d'engrais liquide 12-0-0-26 et 3-18-18-0 ; ou
un mélange de SAP à base d'amidon, d'eau et d'engrais liquide 10-34-0-0,32-0-0-0,12-0-0-26 et 3-18-18-0 dans lequel le mélange inclut 6,8 g de SAP à base d'amidon pour chaque 114 ml d'eau, d'engrais liquide 10-34-0-0 et 32-0-0-0 et 57 ml d'engrais liquide 12-0-0-26 et 3-18-18-0 ; ou
un mélange de SAP à base d'amidon, d'eau et d'engrais liquide 10-34-0-0,32-0-0-0,12-0-0-26 et 3-18-18-0 dans lequel le mélange inclut 6,8 g de SAP à base d'amidon pour chaque 114 ml d'engrais liquide 10-34-0-0 et 32-0-0-0 et 57 ml d'engrais liquide 12-0-0-26 et 3-18-18-0 et 228 ml d'eau.

11. Utilisation de l'amendement de sol selon l'une quelconque des revendications 1 à 10, dans laquelle ladite suspension à écoulement libre est vaporisée ou pompée pour la délivrer et l'appliquer au sol ou au milieu de culture, dans laquelle ladite suspension à écoulement libre peut être mesurée.

12. Utilisation de l'amendement de sol selon la revendication 11, dans laquelle ladite suspension à écoulement libre est diffusée sur le sol à travers une buse de vaporisation.

13. Utilisation de l'amendement de sol selon la revendication 11, dans laquelle ladite suspension à écoulement libre est vaporisée ou injectée dans le sol.

14. Procédé de fabrication d'un amendement de sol, comprenant :
le mélange d'un produit superabsorbant de copolymère greffé d'amidon selon la revendication 1 avec un engrais liquide qui comprend un engrais de macronutriments N-P-K-S choisi parmi : 32-0-0-0, 28-0-0-0, 10-34-0-0, 12-0-0-26, 20-0-0-0, 3-18-18-0, 20-0-0-5, 0-0-15-0, 0-0-13-0, 7-21-7-0 et des mélanges de ceux-ci pour former une suspension à écoulement libre qui contient 0,15 kg (0,33 livre), 0,23 kg (0,5 livre), 0,45 kg (1,0 livre) ou 0,91 kg (2,0 livres) du copolymère greffé d'amidon pour chaque 3,79 l (1,0 gallon) de l'engrais liquide.

15. Procédé de fabrication de l'amendement de sol selon la revendication 14, dans lequel le produit superabsorbant de copolymère greffé d'amidon est produit par un procédé qui comprend :
la polymérisation par greffe d'un monomère sur un amidon pour former le copolymère greffé d'amidon ;
la saponification du copolymère greffé d'amidon pour former un saponifié ;
la précipitation du copolymère greffé d'amidon saponifié ;
le forçage du saponifié à travers une pluralité d'ouvertures pour former des rangées de saponifiés de copolymère greffé d'amidon ; et
la granularisation des rangées de saponifiés de copolymère greffé d'amidon.
